# EUROPÄISCHE PATENTSCHRIFT

(11) **EP 2 944 854 B1**
(45) Veröffentlichungstag und Bekanntmachung des Hinweises auf die Patenterteilung: **11.07.2018**
(21) Anmeldenummer: 15162904.5
(22) Anmeldetag: 09.04.2015
(51) Int. Cl.: F16L 3/22, H02G 3/04

(54) **KABELLEITER**
CABLE LINE
CONDUCTEUR DE CÂBLES

(30) Priorität: 14.04.2014 DE 202014101758 U
(43) Veröffentlichungstag der Anmeldung: 18.11.2015
(73) Patentinhaber: OBO Bettermann GmbH & Co. KG, 58710 Menden (DE)
(72) Erfinder: Gehling, Andreas Große, 58710 Menden (DE); Gutt, Wolfgang, 58708 Menden (DE)
(74) Vertreter: Haverkamp, Jens

(56) Entgegenhaltungen:
- EP-A1- 0 119 670
- EP-A1- 0 460 350
- EP-A1- 1 416 210
- EP-A2- 0 723 102
- WO-A1-89/04430
- GB-A- 2 474 906
- US-A1- 2009 301 777

## Beschreibung

Die Erfindung betrifft eine Kabelleiter mit zwei mit Abstand zueinander angeordneten und durch Sprossen miteinander verbundenen Tragholmen, welche Sprossen zum Festsetzen von Bügelschellen daran eine in Querrichtung zur Ebene der Kabelleiter offene Montageöffnung mit einem zumindest einseitig in Verlaufsrichtung der Kabelleiter weisenden Hinterschnitt aufweisen, wobei die Sprossen aus zwei in Verlaufrichtung der Kabelleiter mit Abstand zueinander angeordneten, jeweils nach Art eines Trägers mit einem Steg und mit zumindest einem daran angeformten und zu dem anderen Steg weisenden Gurt konzipierten Sprossenprofilen aufgebaut sind, wobei zur Ausbildung jeweils eines in jede Montagerichtung offenen Hinterschnittes jedes Sprossenprofil zumindest einen zu dem anderen Sprossenprofil gerichteten Schenkel als Gurt aufweist.

Kabelleiter dienen neben Kabelrinnen für die Ausbildung von Kabelführungssystemen. Eine derartige Kabelleiter umfasst zwei mit Abstand zueinander angeordnete Tragholme. Diese beiden Tragholme sind durch mit Abstand zueinander angeordnete Sprossen miteinander verbunden. Der zwischen den Tragholmen, die bezüglich ihrer Höhe die Sprossen überragen, befindliche Raum dient als Kabelaufnahme. Die Tragholme weisen typischerweise an ihrem einen längsseitigen Verlauf ein Auge und an ihrem anderen längsseitigen Verlauf einen daran angeformten, in die Kabelaufnahme vorspringenden Schenkel auf. Die Schenkel und die Augen sind typischerweise zu derselben Seite des Steges des Tragholmes weisend vorgesehen. Auf die zu dem Auge weisende Oberseite der abgekanteten Schenkel sind die Sprossen aufgelegt und mit den Tragholmen verbunden, beispielsweise durch Nieten oder dergleichen.

Bei Einsatz von Kabelleitern zum Erstellen eines Kabelführungssystems sind die daran zu führenden Kabel an der Kabelleiter festzulegen. Zu diesem Zweck werden Bügelschellen eingesetzt. Zum Festlegen einer solchen Bügelschelle sind die Sprossen als C-förmige Profile mit ihrer Öffnung nach oben weisend ausgeführt. Die der Längserstreckung der Sprossen folgende Öffnung bildet eine Montageöffnung, deren Längserstreckung quer zur Längserstreckung der Kabelleiter verläuft. Auf Grund der C-förmigen Profilierung der Sprossen ist jeweils ein in jede Richtung der Längserstreckung der Kabelleiter weisender Hinterschnitt gebildet. Zumindest ein in eine Richtung weisender Hinterschnitt wird benötigt, um an eine solche Sprosse eine Bügelschelle anschließen zu können. Eine solche Bügelschelle verfügt über einen Verankerungsabschnitt mit einem zum Eingreifen in den Hinterschnitt der Sprosse vorgesehenen hakenartigen Abschnitt. Dieser wird in die Montageöffnung eingesetzt, in den Hinterschnitt eingeschwenkt, so dass die Bügelschelle zumindest in zwei Freiheitsgraden formschlüssig an eine solche Sprosse angeschlossen ist. Durch das anschließende Einklemmen eines Kabels mit der Bügelschelle wird dieses zusammen mit der Bügelschelle an der Sprosse festgelegt.

Der Abstand der Sprossen zueinander wird zur Gewichts- und Materialersparnis möglich groß gewählt. Der Sprossenabstand ist typischerweise vorgegeben, und zwar durch den Abstand der notwendigen Kabelbefestigungen. Typischer Abstand von Sprossen bei Kabelleitern ist 30 cm. Zur weiteren Gewichtsersparnis werden auch Sprossen eingesetzt, in deren Rücken Ausstanzungen eingebracht sind. Der Rücken einer solchen Sprosse liegt der Montageöffnung gegenüber.

Montiert werden an den Sprossen herkömmlicher Kabelleiter Bügelschellen an der die Montageöffnung aufweisenden Seite. Um an derartige Kabelleiter Kabel von beiden Seiten der Sprossen anschließen zu können, ist bei einer vorbekannten Kabelleiter vorgesehen, die Sprossen mit halben Sprossenabstand wechselweise mit ihrer Montageöffnung in die eine und die andere Richtung anzuordnen. Der halbe Sprossenabstand ist notwendig, damit bei einer Bestückung der Sprossen von beiden Seiten der geforderte Befestigungsabstand eingehalten werden kann. Nachteilig ist bei einer solchen vorbekannten Kabelleiter jedoch, dass die Anzahl der benötigten Sprossen verdoppelt ist, mithin das Gewicht und der notwendige Materialeinsatz ebenfalls entsprechend größer bzw. höher ist als bei Kabelleitern, die nur einseitig bestückt werden können.

Die EP 0 723 102 A2 beschreibt ein Kabelführungssystem, das u.a. auch als Kabelleiter ausgestaltet sein kann. Zwischen zwei Tragholmen sind Sprossen angeordnet, die jeweils aus einem C-förmigen Blechprofil bestehen, das auf einer Seite eine Montageöffnung und sich daran anschließende Hinterschnitte aufweist, die durch in Verlaufsrichtung der Kabelleiter verlaufende Stege gebildet werden. Eine Rohrschelle zur Befestigung eines Kabels kann in die Montageöffnung eingesetzt und mittels Formschluss an den Hinterschnitten verbunden werden. In einem der Montageöffnung gegenüberliegenden Bereich des Profils ist eine Mehrzahl von quer zur Verlaufsrichtung beabstandeten Öffnungen angeordnet. Durch jeweils zwei dieser Öffnungen kann ein Kabelbinder geführt werden, um auf einer der Rohrschelle gegenüberliegenden Seite ein weiteres Kabel zu befestigen. Gemäß einem Ausführungsbeispiel sind die Sprossen mit ihren Montageöffnungen abwechselnd gegensinnig orientiert.
Ausgehend von diesem diskutierten Stand der Technik liegt der Erfindung daher die Aufgabe zu Grunde eine eingangs genannte Kabelleiter dergestalt weiterzubilden, dass eine beidseitige Bestückung derselben mit Kabeln möglich ist, ohne die Anzahl der Sprossen gegenüber einseitig bestückbaren Kabelleitern erhöhen zu müssen.
Gelöst wird diese Aufgabe erfindungsgemäß durch eine eingangs genannte, gattungsgemäße Kabelleiter, bei der bei Vorsehen nur eines Gurtes an jedem Sprossenprofil diese an unterschiedlichen Längsseiten des jeweiligen Steges angeformt sind, damit zwei in entgegengesetzte Richtungen offene Montageöffnungen bereitgestellt sind und jede Sprosse durch Einsetzen des oder der Verankerungsabschnitte einer Bügelschelle in einen solchen Hinterschnitt beidseitig mit Bügelschellen bestückbar ist, und bei der die Sprossen bezüglich der Ausgestaltung ihrer Montageöffnungen gleichsinnig orientiert zwischen den Tragholmen angeordnet sind.
Bei dieser Kabelleiter sind die Sprossen so ausgebildet, dass eine Bestückung derselben von beiden Seiten möglich ist. Dieses gelingt, indem jede Sprosse zwei mit Abstand zueinander angeordnete Sprossenprofile aufweist. Jedes Sprossenprofil ist nach Art eines Trägers konzipiert. Jedes Sprossenprofil verfügt damit über einen Last aufnehmenden Steg und zur Ausbildung eines zumindest in eine Verlaufsrichtung der Kabelleiter weisenden Hinterschnittes über einen in Richtung zu dem anderen Sprossenprofil gerichteten Schenkel. Dieser stellt einen Gurt des als Träger konzipierten Sprossenprofils dar. Der Abstand der beiden Sprossenprofile voneinander definiert die Weite der beiden Montageöffnungen. Dieser entspricht der für das Anschließen von Bügelschellen mit ihrem Verankerungsabschnitt erforderlichen Weite. Durch unterschiedliche Schenkellänge des jeweils zu dem anderen Sprossenprofil gerichteten Schenkels kann die lichte Weite der beiden Montageöffnungen unterschiedlich ausgelegt sein. Sodann könnte in beiden, an unterschiedlichen Seiten einer solchen Sprosse befindlichen Montageöffnungen zum Anschließen bezüglich ihrer Breite unterschiedlicher Bügelschellen genutzt werden.

Bei diesem Konzept hat man sich über das Vorurteil hinweggesetzt, dass Sprossen von Kabelleitern, um eine hinreichende Belastbarkeit zu erzielen, einen den jeweiligen Hinterschnitt ausbildenden Profilanteil verbindenden stabilen Rücken aufweisen müssen. Aus diesem Grunde sind vorbekannte Sprossen C-förmig profiliert, mit ihrer Profilöffnung nach oben oder nach unten weisend. Beim Gegenstand der Sprossen des erfindungsgemäßen Kabelleiters werden hingegen zwei Sprossenprofile zum Ausbilden einer Sprosse verwendet. Die beiden Sprossenprofile sind nach Art eines Trägers konzipiert. Die durch die Profilierung gebildete Öffnung ist jeweils zu dem anderen Sprossenprofil weisend angeordnet. Hierdurch sind zwei, einander bezüglich ihrer Öffnungsrichtung gegenüberliegende Montageöffnungen bereitgestellt. Infolgedessen kann eine solche Kabelleiter genutzt werden, um, wenn gewünscht, beidseitig an jede Sprosse Kabel beispielsweise mittels Bügelschellen anschließen zu können. Die Nutzung jeder Sprosse zum Halten von Kabeln an jeder Sprossenseite erlaubt somit eine Beabstandung der Sprossen mit dem geforderten Sprossenabstand. Eine Verdopplung der Sprossenanzahl, wie dieses beim Stand der Technik erforderlich ist, ist beim Gegenstand dieser Kabelleiter nicht erforderlich. Zudem ist bei der Montage nicht Sorge dafür zu tragen, dass die Sprossen in wechselweise unterschiedlicher Orientierung zwischen den Tragholmen angeordnet werden müssen. Daher liegt dem beanspruchten Kabelleiter bezüglich der Ausbildung seiner Sprossen ein sich von herkömmlichen Konzepten signifikant unterscheidendes Konzept zu Grunde.

Aus diesem Grunde liegt eine besonders bevorzugte Verwendung einer solchen Kabelleiter darin, diese zur beidseitigen Bestückung zu nutzen, also zum Halten von Kabeln oder anderen Leitungen auf der Oberseite und an der Unterseite der Sprossen.

Typischerweise wird man jedes Sprossenprofil mit zwei Gurten ausrüsten, die jeweils zu dem anderen Sprossenprofil weisen. Ein solches Sprossenprofil ist sodann nach Art eines U-Trägers ausgeführt. Sind beide Sprossenprofile einer Sprosse derartig ausgeführt, sind entsprechend beide Montageöffnungen in jede Richtung des Längsverlaufes der Kabelleiter hinterschnitten und können wie Montageöffnungen herkömmlicher Sprossen genutzt werden, und zwar sowohl zum Anschließen einer Bügelschelle von oben als auch von unten.

Eine solche aus zwei Sprossenprofilen gebildete Sprosse ist mit ihrem Endabschnitt jeweils an einen Tragholm angeschlossen. Grundsätzlich ist es bei einer solchen Ausgestaltung möglich, dass die Sprossenprofile einer solchen Sprosse miteinander nicht verbunden sind. Vorteilhaft ist es jedoch, die beiden Sprossenprofile durch Brückenabschnitte miteinander zu verbinden bzw. eine solche Sprosse mit solchen Brückabschnitten herzustellen. Die Brückenabschnitte befinden sich vorzugsweise jedenfalls auch in den Endabschnitten der Sprosse, so dass diese zum Anschließen der Sprosse an jeden Tragholm genutzt werden können. Durch diese Brückenabschnitte wird nicht nur Material bereitgestellt, an bzw. mit dem eine solche Sprosse mit dem Tragholm verbunden werden kann, sondern es wird zudem die Handhabung der Sprosse beim Herstellprozess vereinfacht, da dann die beiden Sprossenprofile nicht einzeln gehandhabt werden müssen. Die Brückenabschnitte sind Fortsätze eines Schenkels (Gurtes) der Sprossenprofile und sind typischerweise an diese angeformt. Wenn zum Verbinden der beiden Sprossenprofile Brückenabschnitte verwendet werden, ist es für die genannten Zwecke ausreichend, diese nur an einer Sprossenseite - Oberseite oder Unterseite - anzuordnen. Befinden sich die Brückenabschnitte nur in den Endabschnitten einer solchen Sprosse, weist eine solche Sprosse an ihren beiden zum Anschließen von Bügelschellen vorgesehenen Seiten eine durchgängige, nach Art einer Nut konzipierte Montageöffnung auf. Zur weiteren Aussteifung der Sprossen in Richtung des Längsverlaufes der Kabelleiter können derartige Brückenabschnitte auch mit Abstand zu den Endabschnitten zum Verbinden der beiden Sprossenprofile eingesetzt werden. In einem solchen Fall ist eine der beiden Montageöffnungen der Sprosse durch solche Brückenabschnitte in mehrere Montageöffnungsabschnitte unterteilt.

Nachfolgend ist die Erfindung anhand von Ausführungsbeispielen unter Bezugnahme auf die beigefügten Figuren beschrieben. Es zeigen:
- **Fig. 1:**: Eine perspektivische Ansicht eines Abschnittes einer Kabelleiter,
- **Fig. 2:**: eine Stirnseitenansicht der Kabelleiter der Figur 1,
- **Fig. 3:**: eine perspektivische Ansicht der in Figur 3 gezeigten Sprosse,
- **Fig. 4:**: eine perspektivische Schnittdarstellung durch die Kabelleiter der Figur 4 entlang der darin gezeigten Schnittline A-B,
- **Fig. 5:**: einen Ausschnitt aus einem Längsschnitt durch die Kabelleiter der Figur 1 im Bereich einer Sprosse und
- **Fig. 6:**: eine Sprosse gemäß einer weiteren Ausgestaltung zur Ausbildung einer Kabelleiter.

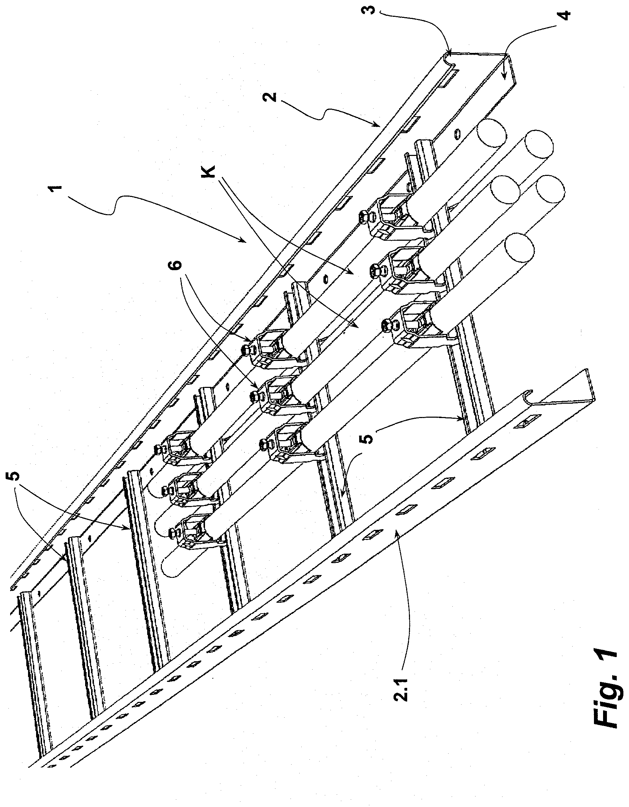

Eine Kabelleiter 1 umfasst zwei als Seitenholme ausgebildete Tragholme 2, 2.1. Der Tragholm 2 weist an seinem oberen Abschluss ein Auge 3 und an seinem unteren Abschluss einen zu dem Tragholm 2.1 vorspringenden Auflageschenkel 4 auf. Bei dem dargestellten Ausführungsbeispiel ist der Seitenholm 2 mit einer rechteckigen, seiner Längserstreckung folgenden Lochung ausgestattet. Der Tragholm 2.1 ist genauso aufgebaut wie der Tragholm 2, jedoch bezüglich der Ausrichtung seines Auges und seines Auflageschenkels spiegelsymmetrisch zu dem Tragholm 2 konzipiert. Die beiden Tragholme 2, 2.1 sind durch eine Vielzahl von Sprossen 5 miteinander verbunden. Die Sprossen 5 sind an die Tragholme 2, 2.1 angeschlossen. Die Sprossen 5 dienen zum Tragen von Kabeln, die mittels Bügelschellen 6, 6.1 an den Sprossen 5 befestigt sind. Die Sprossen 5 sind ausgelegt, damit Bügelschellen 6 bzw. 6.1 von beiden Seiten und somit von oben sowie von unten daran angeschlossen werden können. Figur 1 zeigt die Kabelleiter 1 mit mehreren oberseitig an den Sprossen 5 und mehreren unterseitig an den Sprossen 5 festgelegten Kabeln K.

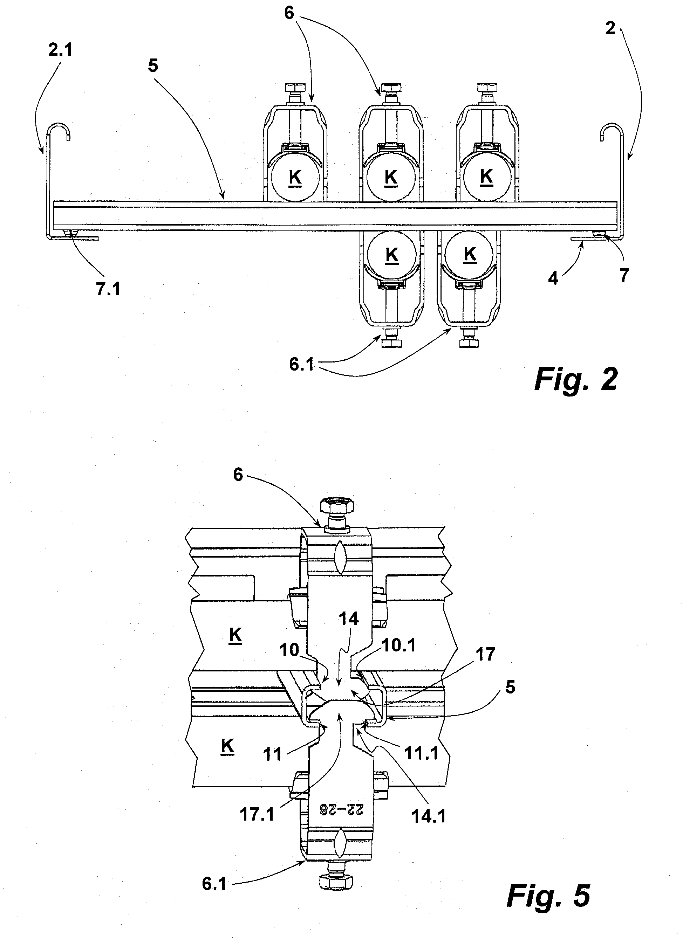

Die Möglichkeit eines beidseitigen Anschlusses von Kabeln K an die Sprossen 5 ist besonders deutlich aus der Stirnseitenansicht der Kabelleiter 1 in der Figur 2 erkennbar. Die gezeigte Sprosse 5 trägt an ihren über den jeweiligen Auflageschenkel des Tragholms 2 bzw. 2.1 ragenden Abschnitt jeweils einen Wulst 7, 7.1, mit dem die Sprosse 5 auf der Oberseite des jeweiligen Auflageschenkels 4 der Tragholme 2, 2.1 aufliegt und mit dem die Sprosse 5 mit dem jeweiligen Auflageschenkel 4 verschweißt ist. Angeschlossen ist die Sprosse 5 an die beiden Tragholme 2, 2.1 damit bei dem dargestellten Ausführungsbeispiel durch eine Buckelschweißung. Die auf der Oberseite der Sprossen 5 befindlichen Kabel K sind mit den Bügelschellen 6 an der Kabelleiter 1 festgelegt. Zum Anschließen der unteren Kabel K dienen die Bügelschellen 6.1. Die Bügelschellen 6, 6.1 sind identisch konzipiert und unterscheiden sich bei dem dargestellten Ausführungsbeispiel nicht voneinander.

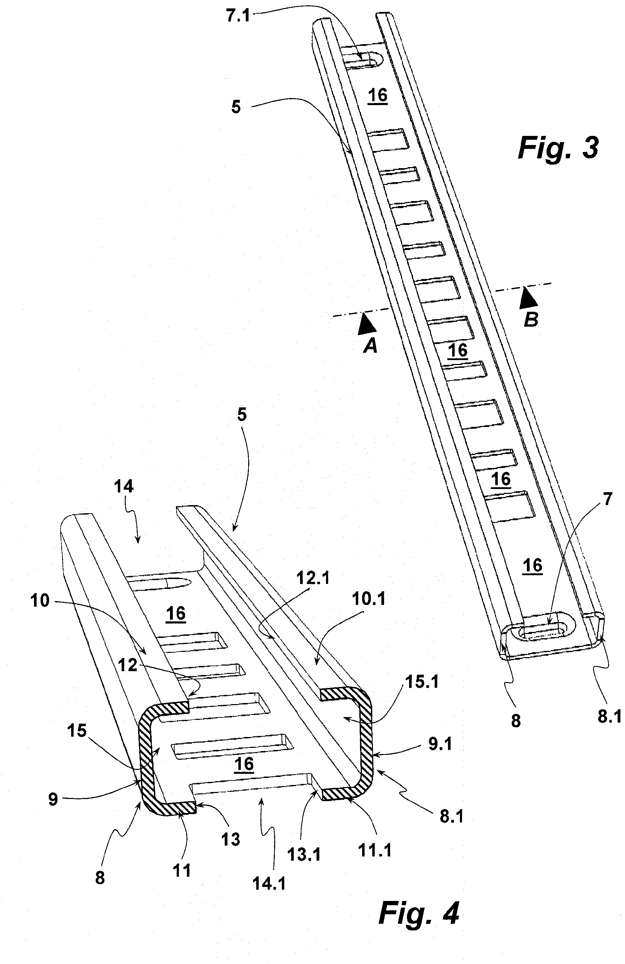

Die Konzeption einer solchen Sprosse 5 ist nachstehend mit weiteren Details unter Verweis auf die Figuren 3 und 4 beschrieben. Die Sprosse 5 ist durch zwei Sprossenprofile 8, 8.1 gebildet. Jedes Sprossenprofil 8, 8.1 ist U-förmig ausgeführt, wie dieses besonders gut aus der Schnittdarstellung der Figur 4 erkennbar ist. Die Schenkel dieser U-förmigen Sprossenprofile 8, 8.1 sind zueinander gerichtet und befinden sich in einer Ebene. Jedes Sprossenprofil 8, 8.1 ist nach Art eines Trägers ausführt und verfügt über einen Steg 9 bzw. 9.1 und bei dem dargestellten Ausführungsbeispiel über zwei, als zu dem jeweiligen anderen Sprossenprofil weisende Schenkel ausgeführte Gurte - einen Obergurt 10 bzw. 10.1 sowie einen Untergurt 11, 11.1. Diese Gurte 10, 11; 10.1, 11.1 stellen die Schenkel des U-förmig ausgeführten Sprossenprofils 8, 8.1 dar. Die Gurte 10, 11 bzw. 10.1, 11.1 sind an den jeweiligen Steg 9 bzw. 9.1 zur Ausbildung des beschriebenen U-förmigen Sprossenprofils 8 bzw. 8.1 angeformt. Die Höhe der Stege 9, 9.1 ist gleich, so dass die freien Enden der Gurte 10, 10.1 sowie 11, 11.1 miteinander fluchten und somit in einer Ebene liegen. Durch die zueinander weisenden Seiten der Stirnflächen 12, 12.1 der Obergurte 10, 10.1 ist eine erste Montageöffnung 14 bereitgestellt. Diese erstreckt sich über die gesamte Länge der Sprosse 5. Die Montageöffnung 14 dient zur Aufnahme der Verankerungsabschnitte der Bügelschellen 6. Durch die zueinander weisenden Obergurte 10, 10.1, die von den Stegen 9, 9.1 jeweils vorspringen, ist bezüglich der Montageöffnung 14 jeweils ein Hinterschnitt 15, 15.1 gebildet. Damit ist die Montageöffnung 14 in jede Längsverlaufsrichtung der Kabelleiter 1 weisend hinterschnitten.

Bezüglich der Untergurte 11, 11.1 sind deren Stirnflächen 13, 13.1 ebenso voneinander beabstandet wie die Stirnflächen 12, 12.1 der Obergurte 10, 10.1. Damit befindet sich zwischen den Stirnflächen 13, 13.1 der Untergurte 11, 11.1 eine zweite Montageöffnung 14.1 zum Einsetzen von Verankerungsabschnitten von Bügelschellen 6.1. Die lichte Weite der Montageöffnungen 14, 14.1 ist bei dem dargestellten Ausführungsbeispiel gleich. Daher können zum Anschließen von Kabeln K an die Sprosse 5 unabhängig von einer oberseitigen oder unterseitigen Befestigung derselben dieselben Bügelschellen verwendet werden.

Bei dem in den Figuren 1 bis 4 dargestellten Ausführungsbeispielen sind die beiden Sprossenprofile 8, 8.1 der Sprosse 5 durch mehrere Brückenabschnitte 16 miteinander verbunden. Die Brückenabschnitte 16 sind bei diesem Ausführungsbeispiel an die Untergurte 11, 11.1 angeformt. Durch die die Montageöffnung 14.1 querenden Brückenabschnitte 16 ist die Montageöffnung 14.1 letztendlich in eine Vielzahl von Montageöffnungsabschnitten unterteilt. Die Sprosse 5 weist an ihren jeweiligen Endabschnitten einen sich über einen etwas größeren Längenabschnitt der Sprosse 5 erstreckenden Brückenabschnitt 16 auf. In diesem ist der bereits zuvor beschriebene Wulst 7, 7.1 eingeprägt.

Die Sprosse 5 verfügt somit, wie aus Figur 3 deutlich erkennbar, über die Möglichkeit, Bügelschellen an den Obergurten 10, 10.1 und an den Untergurten 11, 11.1 zu verklammern. Während in der oberseitigen Montageöffnung 14 Bügelschellen an beliebiger Stelle positioniert werden können, ist eine Anordnung derselben in der durch die Brückenabschnitte unterteilten Montageöffnung 14.1 auf diejenigen Abschnitte beschränkt, in denen sich keine Brückenabschnitte 16 befinden. Die Weite der einzelnen Montageöffnungsabschnitte der Montageöffnung 14.1 sind ausgelegt, damit darin entweder eine Bügelschelle mit ihren beiden Verankerungsabschnitten positioniert werden kann oder, dass durch die beiden voneinander in Längsrichtung der Sprosse 5 beabstandeten Verankerungsabschnitte einer Bügelschelle zum Festsetzen derselben zwei solche Montageöffnungsabschnitte genutzt werden, die sodann durch einen Brückenabschnitt 16 voneinander getrennt sind. Insofern überbrückt bei einer solchen Ausgestaltung die Bügelschelle je nach Auslegung einen oder sogar mehrere Brückenabschnitte 16. Selbstverständlich ist auch eine Kombination dieser Ausgestaltungen möglich.

Die Festlegung der Kabel K an einer Sprosse 5 mit den Bügelschellen 6, 6.1 ist bezüglich ihrer Verankerung an der Sprosse 5 in Figur 5 erkennbar. Die in Figur 5 gezeigte Bügelschelle 6 greift mit ihrem Verankerungsabschnitt 17 durch die Montageöffnung 14 und ist in ihrer in Figur 5 gezeigten Stellung durch Einklemmen des Kabels K gehalten. Die Bügelschelle 6 weist einen in jede Längsrichtung der Kabelleiter weisenden hakenförmigen Eingriffsabschnitt im Verankerungsabschnitt auf, der sich beim Spannen der Bügelschelle 6 gegen die Innenwandung der Obergurte 10, 10.1 legt, während das Kabel K gegen die Oberseite der Obergurte 10, 10.1 gepresst wird. Der Verankerungsabschnitt 17.1 der unterseitig montierten Bügelschelle 6.1 durchgreift hingegen einen Abschnitt der Montageöffnung 14.1 und ist nach Spannen derselben unter Zwischenschaltung eines Kabels K in gleicher Weise, wie dieses zu der Bügelschelle 6 beschrieben ist, unterseitig an der Sprosse 5 festgelegt. Eingespannt ist zwischen dem Verankerungsabschnitt der Bügelschelle und dem Kabel der Untergurt 11, 11.1. Die Höhe der Sprosse 5 ist nicht notwendigerweise höher als dieses von herkömmlichen Sprossen bekannt ist. Die Höhe der Sprosse 5 wird man in Abhängigkeit von dem auszunehmenden Kabelgewicht auslegen.

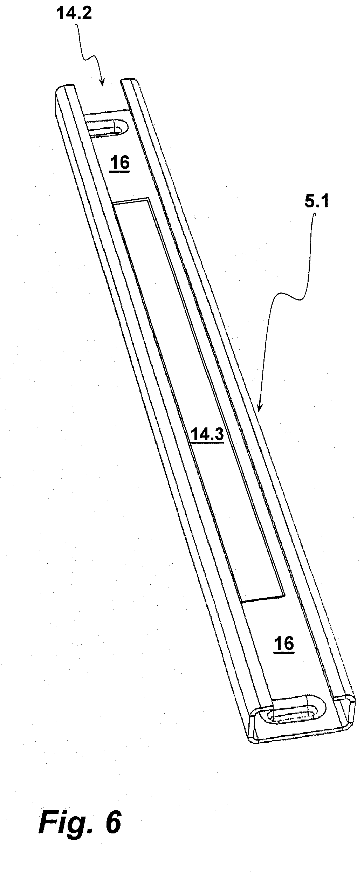

Figur 6 zeigt ein weiteres Ausführungsbeispiel einer Sprosse 5.1 zur Ausbildung einer Kabelleiter. Die Sprosse 5.1 ist prinzipiell konzipiert wie die Sprosse 5 des vorangegangenen Ausführungsbeispiels. Die Sprosse 5.1 unterscheidet sich allein dadurch, dass diese zusätzlich zu ihrer oberen durchgehenden Montageöffnung 14.2 auch unterseitig eine durchgehende und nicht durch Brückenabschnitte unterteilte Montageöffnung 14.3 aufweist. Die beiden Sprossenprofile der Sprosse 5.1 sind nur im Bereich ihrer Enden durch jeweils einen Brückenabschnitte 16.1 miteinander verbunden, und zwar mit denjenigen Brückenabschnitten, in denen der Wulst für die vorgesehene Buckelschweißung eingeprägt ist. Bei dem Ausführungsbeispiel der Sprosse 5.1 gemäß Figur 6 können Bügelschellen auch in der Montageöffnung 14.3 an beliebiger Stelle festgelegt werden.

Bei der in den Figuren gezeigten Kabelleiter 1 sind die Tragholme 2, 2.1 gerade und parallel zueinander verlaufend vorgesehen. Dieses ist zur Verwirklichung des vorbeschriebenen Konzeptes nicht zwingend erforderlich. Daher können in derselben Art und Weise auch Kabelleiterkreuzungen, Leiter-T-Stücke, andere Abzweigstücke, Bögen oder Reduzierverbinder ausgebildet werden, deren entsprechend geformte Tragholme mit Sprossen der beschriebenen Art miteinander verbunden sind. Bei Kabelleiter-Kreuzungen, Kabelleiter-T-Stücken oder anderen Abzweigen wird man zur Überbrückung des bezüglich seiner Längserstreckung unterbrochenen Tragholms ein Trägerholmersatzprofil als Träger für die in dieser zu überbrückenden Strecke anzuordnenden Sprossen vorsehen. Ein solches Trägerholmersatzprofil erstreckt sich von einem Tragholm zum nächsten und überbrückt die sich aufgrund des Abzweigs ergebende Tragholmunterbrechung. Die Höhe eines solchen Trageholmersatzprofils entspricht typischerweise der Höhe der Sprossen, damit dieses kein Hindernis darstellt, welches von darüber geführten Kabeln überwunden werden muss.

Die Beschreibung der Erfindung - auch anhand der konkret beschriebenen Ausführungsbeispiele - verdeutlicht die durch den innovativen Kabelleiter gewonnenen Vorteile gegenüber herkömmlichen. Die Erfindung ist lediglich anhand von Ausführungsbeispielen beschrieben worden. Ohne den Umfang der geltenden Ansprüche zu verlassen, ergeben sich für einen Fachmann zahlreiche weitere Ausgestaltungen, den Gegenstand dieser Erfindung verwirklichen zu können.

### Bezugszeichenliste

- 1: Kabelleiter
- 2, 2.1: Tragholm
- 3: Auge
- 4: Auflageschenkel
- 5, 5.1: Sprosse
- 6, 6.1: Bügelschelle
- 7,7.1: Wulst
- 8, 8.1: Sprossenprofil
- 9,9.1: Steg
- 10, 10.1: Obergurt
- 11,11.1: Untergurt
- 12, 12.1: Stirnfläche
- 13, 13.1: Stirnfläche
- 14, 14.1, 14.2, 14.3: Montageöffnung
- 15, 15.1: Hinterschnitt
- 16: Brückenabschnitt
- 17: Verankerungsabschnitt

## Patentansprüche

1. Kabelleiter mit zwei mit Abstand zueinander angeordneten und durch Sprossen (5, 5.1) miteinander verbundenen Tragholmen (2, 2.1), welche Sprossen (5, 5.1) zum Festsetzen von Bügelschellen (6, 6.1) daran eine in Querrichtung zur Ebene der Kabelleiter (1) offene Montageöffnung (14, 14.1, 14.2, 14.3) mit einem zumindest einseitig in Verlaufsrichtung der Kabelleiter (1) weisenden Hinterschnitt (15, 15.1) aufweisen, wobei die Sprossen (5, 5.1) aus zwei in Verlaufrichtung der Kabelleiter (1) mit Abstand zueinander angeordneten, jeweils nach Art eines Trägers mit einem Steg (9, 9.1) und mit zumindest einem daran angeformten und zu dem anderen Steg weisenden Gurt (10, 10.1, 11, 11.1) konzipierten Sprossenprofilen (8, 8.1) aufgebaut sind, wobei zur Ausbildung jeweils eines in jede Montagerichtung offenen Hinterschnittes (15, 15.1) jedes Sprossenprofil (8, 8.1) zumindest einen zu dem anderen Sprossenprofil (8.1 bzw. 8) gerichteten Schenkel als Gurt (10, 10.1, 11, 11.1) aufweist, **dadurch gekennzeichnet, dass** bei Vorsehen nur eines Gurtes (10, 10.1, 11, 11.1) an jedem Sprossenprofil (8, 8.1) diese an unterschiedlichen Längsseiten des jeweiligen Steges (9, 9.1) angeformt sind, damit zwei in entgegengesetzte Richtungen offene Montageöffnungen (14, 14.1; 14.2, 14.3) bereitgestellt sind und jede Sprosse (5, 5.1) durch Einsetzen des oder der Verankerungsabschnitte (17) einer Bügelschelle (6, 6.1) in einen solchen Hinterschnitt (15, 15.1) beidseitig mit Bügelschellen (6, 6.1) bestückbar ist, und dass die Sprossen (5, 5.1) bezüglich der Ausgestaltung ihrer Montageöffnungen (14, 14.1; 14.2, 14.3) gleichsinnig orientiert zwischen den Tragholmen (2, 2.1) angeordnet sind.

2. Kabelleiter nach Anspruch 1, **dadurch gekennzeichnet, dass** zumindest eines der beiden Sprossenprofile (8, 8.1) einer Sprosse (5, 5.1) nach Art eines U-Trägers ausgeführt ist und somit zumindest eine Montageöffnung (14, 14.1, 14.2, 14.3) in beide Richtungen in Längsverlauf der Kabelleiter hinterschnitten ist.

3. Kabelleiter nach Anspruch 2, **dadurch gekennzeichnet, dass** beide Sprossenprofile (8, 8.1) einer Sprosse nach Art eines U-förmigen Trägers ausgeführt sind, wobei die durch die Schenkel gebildeten Gurte zueinander weisend sind.

4. Kabelleiter nach einem der Ansprüche 1 bis 3, **dadurch gekennzeichnet, dass** die beiden Sprossenprofile (8, 8.1) durch Brückenabschnitte (16) miteinander verbunden sind, wobei die Brückenabschnitte (16, 16.1) einen Gurt (11, 11.1) des einen Sprossenprofils (8, 8.1) mit dem Steg (9, 9.1) oder mit dem diesem Gurt (11 bzw. 11.1) des einen Sprossenprofils (8, 8.1) entsprechenden Gurt (11.1 bzw. 11) des anderen Sprossenprofils (8.1 bzw. 8) verbunden sind.

5. Kabelleiter nach Anspruch 3 oder 4, **dadurch gekennzeichnet, dass** die Brückenabschnitte (16) an die beiden Sprossenprofile (8, 8.1) angeformt sind.

6. Kabelleiter nach Anspruch 4 oder 5, **dadurch gekennzeichnet, dass** durch die Brückenabschnitte (16) nur eine der beiden Montagenöffnungen (14.1, 14.2, 14.3) einer Sprosse (5) in einzelne Montageöffnungsabschnitte unterteilt ist.

7. Kabelleiter nach einem der Ansprüche 1 bis 6, **dadurch gekennzeichnet, dass** an die Sprossen (5, 5.1) derselben ober- und unterseitig mittels Bügelschellen (6, 6.1) Kabel (K) angeschlossen sind.

8. Verwendung einer Kabelleiter nach einem der Ansprüche 1 bis 6, **dadurch gekennzeichnet, dass** die Sprossen (5, 5.1) der Kabelleiter (1) beidseitig mit Kabel (K) haltenden Bügelschellen (6, 6.1) bestückt werden.

## Claims

1. Cable line with two carrying spars (2, 2.1) arranged at a distance from one another and connected to one another by crossbars (5, 5.1), said crossbars (5, 5.1) comprising, for the purpose of securing cleats (6, 6.1) to them, an installation opening (14, 14.1, 14.2, 14.3) which is open in a direction transverse to the plane of the cable line (1), with a relief cut (15, 15.1) pointing in the direction of run of the cable line (1), wherein the crossbars (5, 5.1) are formed from two crossbar profiles (8, 8.1), arranged at a distance from one another in the direction of run of the cable line (1), configured in each case in the form of a carrier with a web (9, 9.1) and with at least one belt (10, 10.1, 11, 11.1) moulded thereto and pointing towards the other web, wherein, in order to form in each case a relief cut (15,15.1) open into every installation direction, each crossbar profile (8, 8.1) comprises at least one limb, pointing towards the other crossbar profile (8.1 or 8 respectively), as a belt (10, 10.1, 11, 11.1), **characterised in that,** with the provision of only one belt (10, 10.1, 11, 11.1) at each crossbar profile (8, 8.1), these are moulded to different longitudinal sides of the respective web (9, 9.1), such that two installation openings (14, 14.1; 14.2, 14.3) are thereby provided, open in opposing directions, and that each crossbar (5, 5.1), by insertion of the anchoring section(s) (17) of a cleat (6, 6.1) into such a relief cut (15, 15.1) can be fitted on both sides with cleats (6, 6.1), and that the crossbars (5, 5.1) are arranged, in relation to the configuration of their installation openings (14, 14.1; 14.2, 14.3), oriented equidirectionally between the carrying spars (2, 2.1).

2. Cable line according to claim 1, **characterised in that** at least one of the two crossbar profiles (8, 8.1) of a crossbar (5, 5.1) is configured in the form of a U-carrier, and therefore at least one installation opening (14, 14.1, 14.2, 14.3) is relief-cut in both directions in the longitudinal extension of the cable line.

3. Cable line according to claim 2, **characterised in that** both crossbar profiles (8, 8.1) of a crossbar are configured in the form of U-carriers, wherein the belts formed by the limbs point towards one another.

4. Cable line according to any one of claims 1 to 3, **characterised in that** both the crossbar profiles (8, 8.1) are connected to one another by bridge sections (16), wherein the bridge sections (16, 16.1) connect a belt (11, 11.1) of the one crossbar profile (8, 8.1) to the web (9, 9.1) or to the belt (11.1 or 11 respectively) of the other crossbar profile (8.1 or 8 respectively) which corresponds to this belt (11 or 11.1 respectively) of the one crossbar profile (8, 8.1).

5. Cable line according to claim 3 or 4, **characterised in that** the bridge sections (16) are moulded to both the crossbar profiles (8, 8.1).

6. Cable line according to claim 4 or 5, **characterised in that** only one of the two installation openings (14.1, 14.2, 14.3) of a crossbar (5) is subdivided by the bridge sections (16).

7. Cable line according to any one of claims 1 to 6, **characterised in that** cables (K) are connected to the crossbars (5, 5.1) on their upper and lower sides by means of cleats (6, 6.1).

8. Use of a cable line according to any one of claims 1 to 6, **characterised in that** the crossbars (5, 5.1) of the cable line (1) are fitted on both sides with cleats (6, 6.1) holding cables (K).

## Revendications

1. Échelle à câbles comportant deux montants (2, 2.1) positionnés à distance l'un par rapport à l'autre et reliés l'un à l'autre par des échelons (5, 5.1), lesquels échelons (5, 5.1) présentent une ouverture de montage (14, 14.1, 14.2, 14.3) ouverte dans le sens transversal par rapport au plan de l'échelle à câbles (1), destinée à y fixer des serre-câbles à étrier (6, 6.1), avec une contre-découpe (15, 15,1) orientée, au moins d'un côté, dans le sens du tracé de l'échelle à câbles (1), lesquels échelons (5, 5.1) étant structurés par deux profilés d'échelon (8, 8.1) positionnés à distance l'un par rapport à l'autre dans le sens du tracé de l'échelle à câbles (1) conçus chacun à la manière d'un support avec une aile médiane (9, 9.1) et avec au moins une membrure (10, 10.1, 11, 11.1) moulée sur cette dernière et orientée vers l'autre aile médiane, chaque profilé d'échelon (8, 8.1) présentant, afin de former une contre-découpe (15, 15.1) ouverte dans chaque direction de montage, au moins une aile orientée vers l'autre profilé d'échelon (8.1 ou 8) faisant office de membrure (10, 10.1, 11, 11.1), **caractérisée en ce que,** quand une seule membrure (10, 10.1, 11, 11.1) est prévue sur chaque profilé d'échelon (8, 8.1), celle-ci est moulée sur différents côtés longitudinaux de l'aile médiane (9, 9.1) en question afin de mettre à disposition deux ouvertures de montage (14, 14.1 ; 14.2, 14.3) ouvertes dans deux directions opposées et que chaque échelon (5, 5.1) peut recevoir des serre-câbles à étrier (6, 6.1) sur les deux côtés en insérant le ou les tronçons d'ancrage (17) d'un serre-câble à étrier (6, 6.1) dans une telle contre-découpe (15, 15.1) et **en ce que** les échelons (5, 5.1) sont, en ce qui concerne la configuration de leurs ouvertures de montage (14, 14.1 ; 14.2, 14.3), disposés entre les montants (2, 2.1) avec une orientation dans le même sens.

2. Échelle à câbles selon la revendication 1, **caractérisée en ce qu'**au moins un des deux profilés d'échelon (8, 8.1) d'un échelon (5, 5.1) est réalisé à la manière d'un support en U et que, de ce fait, au moins une ouverture de montage (14, 14.1, 14.2, 14.3) est contre-découpée dans les deux sens en suivant le tracé longitudinal de l'échelle à câbles.

3. Échelle à câbles selon la revendication 2, **caractérisée en ce que** les deux profilés d'échelon (8, 8.1) d'un échelon sont réalisés à la manière d'un support en U, les membrures formées par les ailes étant orientées les unes vers les autres.

4. Échelle à câbles selon l'une des revendications 1 à 3, **caractérisée en ce que** les deux profilés d'échelon (8, 8.1) sont reliés l'un à l'autre par des tronçons de pontage (16), les tronçons de pontage (16, 16.1) reliant une membrure (11, 11.1) de l'un des profilés d'échelon (8, 8.1) avec l'aile médiane (9, 9.1) ou avec la membrure (11.1 ou 11) de l'autre profilé d'échelon (8.1 ou 8), laquelle correspond à la membrure (11 ou 11.1) de l'un des profilés d'échelon (8, 8.1).

5. Échelle à câbles selon la revendication 3 ou 4, **caractérisée en ce que** les tronçons de pontage (16) sont moulés sur les deux profilés d'échelon (8, 8.1).

6. Échelle à câbles selon la revendication 4 ou 5, **caractérisée en ce que,** en raison des tronçons de pontage (16), une seule des deux ouvertures de montage (14.1, 14.2, 14.3) d'un échelon (5) est subdivisée en tronçons individuels d'ouverture de montage.

7. Échelle à câbles selon l'une des revendications 1 à 6, **caractérisée en ce que** des câbles (K) sont raccordés au moyen de serre-câbles à étrier (6, 6.1) sur les échelons (5, 5.1), sur leur face supérieure ou inférieure.

8. Utilisation d'une échelle à câbles selon l'une des revendications 1 à 6, **caractérisée en ce que** les échelons (5, 5.1) de l'échelle à câbles (1) sont munis sur les deux côtés de serre-câbles à étrier (6,6.1) qui maintiennent des câbles (K).
